# EUROPÄISCHE PATENTANMELDUNG

(11) **EP 4 287 472 A1**
(43) Veröffentlichungstag der Anmeldung: **06.12.2023**
(21) Anmeldenummer: 23175241.1
(22) Anmeldetag: 25.05.2023
(51) Int. Cl.: H02K 15/12

(54) **IMPRÄGNIERVORRICHTUNG ZUM TRÄUFELIMPRÄGNIEREN MINDESTENS EINES FÜR ELEKTRISCHE MASCHINEN BESTIMMTEN MASCHINENTEILS UND VERFAHREN ZUM BETREIBEN EINER DERARTIGEN IMPRÄGNIERVORRICHTUNG**

(30) Priorität: 04.06.2022 DE 102022114209
(71) Anmelder: VAF GmbH, 73441 Bopfingen (DE)
(72) Erfinder: Braun, Thomas, 73469 Riesbürg (DE)
(74) Vertreter: Schorr, Peter Karl

(57) **Zusammenfassung**

Die Erfindung betrifft eine Imprägniervorrichtung (2) zum Träufelimprägnieren mindestens eines für elektrische Maschinen bestimmten Maschinenteils (4), wie Wickelgut, insbesondere Stator oder Rotor, mit mindestens einer Vorerwärmungseinrichtung (6), die mindestens ein Haltemittel (8), an dem mindestens ein Maschinenteil (4) festlegbar ist, und die mindestens eine Stromwärmeeinheit (10) aufweist, die durch mindestens ein Kontaktmittel (12) in der am Haltemittel (8) festgelegten Anordnung des Maschinenteils (4) mit mindestens einem Phasenanschluss des Maschinenteils (4) manuell oder automatisch verbindbar oder verbunden ist und durch die das Maschinenteil (4) auf eine Vorerwärmungseinrichtungs-Temperatur elektrisch beheizbar ist, und mit mindestens einer Träufeleinrichtung (14), der ein durch die Stromwärmeeinheit (10) der Vorerwärmungseinrichtung (6) auf die Vorerwärmungseinrichtungs-Temperatur beheiztes Maschinenteil (4) mittelbar oder unmittelbar zuführbar ist und durch die ein unter Temperaturerhöhung aushärtendes Beschichtungsmittel, wie Harz, insbesondere Kunstharz, auf das Maschinenteil (4) auftragbar, insbesondere träufelbar ist.

## Beschreibung

Die Erfindung betrifft eine Imprägniervorrichtung zum Träufelimprägnieren mindestens eines für elektrische Maschinen bestimmten Maschinenteils sowie ein Verfahren zum Betreiben einer derartigen Imprägniervorrichtung.

Imprägniervorrichtungen zum Träufelimprägnieren mindestens eines für elektrische Maschinen bestimmten Maschinenteils sowie Verfahren zum Betreiben derartiger Imprägniervorrichtungen sind in unterschiedlichen Ausführungsformen aus dem Stand der Technik bekannt. Vor einem Träufelimprägnieren der Maschinenteile müssen diese auf eine bestimmte Temperatur erwärmt werden, um dem zum Beschichten verwendeten Fluid die Möglichkeit zu geben, die unterschiedlichen Komponenten des Maschinenteils zu erreichen und zu bedecken ohne vorher auszuhärten.

Bei den bekannten Imprägniervorrichtungen wird einer Träufeleinrichtung, an der das auszuhärtende Beschichtungsmittel auf das Maschinenteil aufgetragen, insbesondere geträufelt wird, eine Erwärmungseinrichtung vorgeschaltet, in der eine Vielzahl von Maschinenteilen wie in einem Ofen erwärmt werden.

Hierbei hat es sich als nachteilig herausgestellt, dass das Erwärmen der Maschinenteile in der als Ofen ausgebildeten Erwärmungseinrichtung mindestens 30 Minuten umfasst, wodurch ein Imprägnierprozess der Maschinenteile einen erhöhten Zeitbedarf umfasst. Dieser ist abhängig von Masse und Volumen der Maschinenteile, wodurch diese bis zu 1,5 Stunden und länger im Ofen verbringen können, bis die notwendige Maschinenteile-Temperatur erreicht ist.

Eine Aufgabe eines Ausführungsbeispiels der Erfindung ist, eine Imprägniervorrichtung zum Träufelimprägnieren von für Maschinen bestimmte Maschinenteile sowie ein Verfahren zum Betreiben einer derartigen Imprägniervorrichtung vorzuschlagen, bei der ein Herstellungsprozess von beschichteten Maschinenteilen verkürzt ist.

Diese Aufgabe wird gelöst durch eine Imprägniervorrichtung zum Träufelimprägnieren mindestens eines für elektrische Maschinen bestimmten Maschinenteils, wie Wickelguter, insbesondere Stator oder Rotor, mit mindestens einer Vorerwärmungseinrichtung, die mindestens ein Haltemittel, an dem mindestens ein Maschinenteil festlegbar ist, und die mindestens eine Stromwärmeeinheit aufweist, die durch mindestens ein Kontaktmittel in der am Haltemittel festgelegten Anordnung des Maschinenteils mit mindestens einem Phasenanschluss des Maschinenteils manuell oder automatisch verbindbar oder verbunden ist und durch die das Maschinenteil auf eine Vorerwärmungseinrichtungs-Temperatur elektrisch beheizbar ist, und mit mindestens einer Träufeleinrichtung, der ein durch die Stromwärmeeinheit der Vorerwärmungseinrichtung auf die Vorerwärmungseinrichtungs-Temperatur beheiztes Maschinenteil mittelbar oder unmittelbar zuführbar ist und durch die ein unter Temperaturerhöhung aushärtendes Beschichtungsmittel, wie Harz, insbesondere Kunstharz, auf das Maschinenteil auftragbar, insbesondere träufelbar ist.

Dadurch, dass die Imprägniervorrichtung eine Vorerwärmungseinrichtung umfasst, bei der mindestens eines des mindestens einen Maschinenteils elektrisch beheizbar ist, ist das mindestens eine Maschinenteil schnell auf eine Vorerwärmungseinrichtungs-Temperatur beheizbar. Hierdurch kann eine Herstellungszeit eines imprägnierten Maschinenteils verkürzt sein.

Um das mindestens eine Maschinenteil energieeffizient durch elektrisches Beheizen auf die Vorerwärmungseinrichtungs-Temperatur zu erheizen, umfasst ein Ausführungsbeispiel der Imprägniervorrichtung mindestens eine ein Sensormittel umfassende Steuereinheit, durch die ein elektrischer Widerstand des Maschinenteils beim Anordnen am Haltemittel und/oder beim Anschließen an das mindestens eine Kontaktmittel der Stromwärmeeinheit erfassbar oder ermittelbar ist, insbesondere ein Wicklungswiderstand (R20-Wert) des Maschinenteils erfassbar ist, und durch die auf Grundlage des erfassten elektrischen Widerstands eine Stromstärke der Stromzufuhr einstellbar ist.

Hierdurch ist durch die Steuereinheit automatisch der elektrische Widerstand des jeweiligen Maschinenteils erfassbar und ermittelbar und auf Grundlage des erfassten elektrischen Widerstands die Stromstärke der Stromzufuhr einstellbar.

Hierdurch kann individuell jedes einzelne Maschinenteil energieeffizient elektrisch beheizt werden.

Darüber hinaus sind Ausführungsformen der Imprägniervorrichtung denkbar, bei denen die Vorerwärmungseinrichtung relativ zur Träufeleinrichtung bewegbar ist und/oder bei denen die Träufeleinrichtung ortsfest im Raum festgelegt ist.

Wenn die Vorerwärmungseinrichtung relativ zur Träufeleinrichtung bewegbar ist, kann diese beispielsweise einen containerartigen, kastenartigen oder wagenartigen Gegenstand umfassen, der selbststätig oder mittels eines Transportfahrzeugs oder einer Transporteinrichtung bewegbar ist. Solchenfalls können die Maschinenteile in der Vorerwärmungseinrichtung angeordnet und in Richtung Träufeleinrichtung bewegt werden, wobei sie beispielsweise im Zuge des Bewegens der Vorerwärmungseinrichtung von einem Teilelager oder einer Bearbeitungsstation in Richtung Träufeleinrichtung elektrisch beheizt werden. Hierdurch ist die Vorerwärmungseinrichtung ortsunabhängig einsetzbar und beispielsweise in Transportvorrichtungen integrierbar.

Wenn die Träufeleinrichtung ortsfest im Raum festgelegt ist, ist ein Aufbau der Imprägniervorrichtung vereinfacht.

Grundsätzlich ist es denkbar, dass die Vorerwärmungseinrichtung unmittelbar an der Träufeleinrichtung angeordnet ist und die durch die Vorerwärmungseinrichtung auf die Vorerwärmungseinrichtungs-Temperatur beheizten Maschinenteile unmittelbar an die Träufeleinrichtung übergeben werden.

Bei einer Ausführungsform umfasst die Imprägniervorrichtung mindestens eine Erwärmungseinrichtung, die zwischen Vorerwärmungseinrichtung und Träufeleinrichtung angeordnet ist und die eine Erwärmungseinrichtungs-Wärmeeinheit aufweist, durch die eine Erwärmungseinrichtungs-Temperatur am von der Vorerwärmungseinrichtung an die Erwärmungseinrichtung überführten Maschinenteil einstellbar ist, die insbesondere der Vorerwärmungseinrichtung-Temperatur entspricht oder bezüglich der Vorerwärmungseinrichtung-Temperatur erhöht ist.

Das mindestens eine Maschinenteil kann in der Erwärmungseinrichtung auf der gleichen Temperatur gehalten werden. Darüber hinaus können die in der Vorerwärmungseinrichtung vorerwärmten Maschinenteile in der Erwärmungseinrichtung auf eine höhere Temperatur erwärmt werden. Solchenfalls kann beispielsweise die Erwärmungseinrichtung als Ofen ausgebildet sein, in dem die Maschinenteile durch Wärmeleitung, Wärmestrahlung, Konvektion und Dergleichen, erwärmt werden. Auch hierdurch ist ein Herstellungsverfahren von imprägnierten Maschinenteilen zeitreduziert ausbildbar. Darüber hinaus kann durch das Vorsehen einer ofenartig ausgebildeten Erwärmungseinrichtung die Imprägniervorrichtung energieeffizient ausgestattet werden, wenn das Heizen mittels Ofen weniger Energie verbraucht, als das Beheizen mittels elektrischer Leistung.

Bei einer Weiterbildung der Imprägniervorrichtung erweist es sich als vorteilhaft, wenn die Träufeleinrichtung eine Träufeleinrichtung-Wärmeeinheit aufweist, durch die eine Träufeleinrichtungs-Temperatur am von der Vorerwärmungseinrichtung oder von der Erwärmungseinrichtung an die Träufeleinrichtung überführten Maschinenteil einstellbar ist.

Hierdurch kann das mindestens eine Maschinenteil auf einfache Weise auf einer hohen Bauteiltemperatur gehalten werden, wodurch ein Beträufelungsvorgang durch die Träufeleinrichtung ein gleichmäßiges, homogenes Beschichten ermöglicht.

Durch das Beträufeln des Maschinenteils in der Träufeleinrichtung, härtet das Beschichtungsmittel, das auf das Maschinenteil aufgetragen, insbesondere geträufelt wird, nicht unmittelbar aus, sondern verliert mit abnehmender Temperatur an Viskosität und geliert. Um eine gleichmäßige Beschichtung von Beschichtungsmittel zu gewährleisten, erweist es sich als vorteilhaft, wenn die Imprägniervorrichtung mindestens eine Aushärteeinrichtung umfasst, die der Träufeleinrichtung nachgeordnet ist und die eine Aushärteeinrichtungs-Wärmeeinheit aufweist, durch eine Aushärteeinrichtungs-Temperatur am von der Träufeleinrichtung an die Aushärteeinrichtung überführten Maschinenteil einstellbar ist, die eine Aushärteeinrichtungs-Temperatur umfasst entspricht oder die bezüglich der Vorerwärmungseinrichtung-Temperatur erhöht ist.

Sowohl in der Träufeleinrichtung als auch in der Aushärteeinrichtung, können die Maschinenteile drehbar angeordnet sein und permanent um eine Drehachse gedreht werden. Hierdurch ist ein gleichmäßiges Verteilen sowie ein Herstellen einer gleichmäßigen Beschichtung durch das Beschichtungsmittel bei hoher Viskosität und abnehmender Viskosität gewährleistbar.

Die Erwärmungseinrichtungs-Wärmeeinheit, die Träufeleinrichtungs-Wärmeeinheit und/oder die Aushärteeinrichtungs-Wärmeeinheit lassen sich einfach und kostengünstig herstellen, wenn die Erwärmungseinrichtungs-Wärmeeinheit, die Träufeleinrichtungs-Wärmeeinheit und/oder die Aushärteeinrichtungs-Wärmeeinheit einen Ofen umfasst, durch den das Maschinenteil durch Wärmestrahlung, Wärmeleitung, Induktion, Konvektion und/oder erzwungener Konvektion beheizbar ist

Darüber hinaus kann bei einer Ausführungsform der Imprägniervorrichtung vorgesehen sein, dass die Erwärmungseinrichtungs-Wärmeeinheit, die Träufeleinrichtung-Wärmeeinheit und/oder die Aushärteeinrichtungs-Wärmeeinheit jeweils eine eigene oder eine gemeinsame Stromwärmeeinheit aufweist durch die das Maschinenteil elektrisch beheizbar ist.

Wenn alle in der Imprägniervorrichtung verbauten Wärmeeinheiten das Maschinenteil elektrisch beheizen, kann die Imprägniervorrichtung mit ihren einzelnen Einrichtungen kompakt ausgebildet sein. Darüber hinaus können die einzelnen Einrichtungen ortsunabhängig ausgebildet sein, da das Erwärmen der Maschinenteile durch die jeweils eigene oder gemeinsame Stromwärmeeinheit unabhängig von einem wärmeisolierten Raum und/oder einer in diesem wärmeisolierten Raum angeordneten Wärmequelle ist.

Solchenfalls ist es beispielsweise denkbar, dass die Aushärteeinrichtung, wie die Vorerwärmungseinrichtung, mobil ausgebildet ist und die beschichteten Maschinenteile, die in der Aushärteeinrichtung angeordnet sind, bereits einer weiteren Verarbeitung zugeführt werden und gleichzeitig durch die Stromwärmeeinheit den Aushärteprozess durchlaufen.

Bei einer Weiterbildung letztgenannter Ausführungsform ist vorgesehen, dass die jeweils eine eigene Stromwärmeeinheit aufweisende Erwärmungseinrichtungs-Wärmeeinheit, Träufeleinrichtung-Wärmeeinheit und/oder Aushärteeinrichtung-Wärmeeinheit jeweils eine ein Sensormittel umfassende Steuereinheit umfasst, durch die ein elektrischer Widerstand des Maschinenteils erfassbar oder ermittelbar ist, insbesondere ein Wicklungswiderstand (R20-Wert) des Maschinenteils erfassbar ist, und durch die auf Grundlage des erfassten elektrischen Widerstands eine Stromstärke der Stromzufuhr zu einstellen der jeweiligen Maschinenteil-Temperatur einstellbar ist oder dass die eine gemeinsame Stromwärmeeinheit aufweisenden Erwärmungseinrichtungs-Wärmeeinheit, Träufeleinrichtung-Wärmeeinheit und/oder Aushärteeinrichtung-Wärmeeinheit jeweils eine gemeinsame Steuereinheit und in den Einheiten jeweils ein der gemeinsamen Steuereinheit zugeordnetes Sensormittel, durch die ein elektrischer Widerstand des Maschinenteils erfassbar oder ermittelbar ist, insbesondere ein Wicklungswiderstand (R20-Wert) des Maschinenteils erfassbar ist, und durch die auf Grundlage des erfassten elektrischen Widerstands eine Stromstärke der Stromzufuhr zu einstellen der jeweiligen Maschinenteil-Temperatur in der jeweiligen Einheit einstellbar ist.

Bei einer Weiterbildung der Imprägniervorrichtung umfasst diese mindestens eine Überführungseinrichtung, an der das Haltemittel festgelegt ist und durch die das Haltemittel von der Vorerwärmungseinrichtung-Wärmeeinheit zur Erwärmungseinrichtungs-Wärmeeinheit zur Träufeleinrichtung-Wärmeeinheit und/oder zur Aushärteeinrichtungs-Wärmeeinheit überführbar ist.

Hierdurch kann gewährleistet werden, dass auch beim Überführen des Maschinenteils von der Vorerwärmungseinrichtung zur Erwärmungseinrichtung-Wärmeeinheit zwischen den anderen Wärmeeinheiten ermöglicht ist und gleichzeitig ein elektrisches Beheizen ermöglicht ist.

Solchenfalls umfasst die Imprägniervorrichtung beispielsweise ein einziges Haltemittel und ein einziges Kontaktmittel, an dem das Maschinenteil beim Durchlaufen der einzelnen Einrichtungen, also der Vorerwärmungseinrichtung, ggf. der Erwärmungseinrichtung, der Träufeleinrichtung und der Aushärteeinrichtung fortwährend ununterbrochen verbunden ist.

Bei einer Weiterbildung letztgenannter Ausführungsform kann jedoch auch vorgesehen sein, dass die Imprägniervorrichtung mindestens zwei Haltemittel und mindestens zwei Kontaktmittel umfasst, wobei jeweils ein Kontaktmittel einem Haltemittel zugeordnet ist und wobei mindestens ein Vorerwärmungs-Haltemittel in der Vorerwärmungseinrichtung und ein Träufel-Haltemittel in der Erwärmungseinrichtung anordenbar ist, wobei das Träufel-Haltemittel der gemeinsamen oder der jeweiligen Stromwärmeeinheit von Erwärmungseinrichtungs-Wärmeeinheit, Träufeleinrichtung-Wärmeeinheit und/oder Aushärteeinrichtung-Wärmeeinheit zuordenbar ist, die mindestens ein in oder am Träufel-Haltemittel festgelegtes Träufel-Kontaktmittel umfasst, das in der am Träufel-Haltemittel festgelegten Anordnung des Maschinenteils mit mindestens einem Phasenanschluss des Maschinenteils manuell oder automatisch mit einer Stromzufuhr der Stromwärmeeinheit verbindbar oder verbunden ist und durch das das Maschinenteil durchgehend und unterbrechungsfrei elektrisch beheizbar ist.

Solchenfalls ist das Vorerwärmungs-Haltemittel in der Vorerwärmungseinrichtung von dem Träufel-Haltemittel separiert oder separierbar.

Darüber hinaus sind Ausführungsformen denkbar, bei denen die Erwärmungseinrichtung ein eigenes Erwärmungs-Haltemittel mit eigenem Kontaktmittel umfasst und das Maschinenteil von dem Erwärmungs-Haltemittel an das Träufel-Haltemittel übergeben wird.

Ferner ist es denkbar, dass nach dem Durchlaufen der Träufeleinrichtung das Maschinenteil von dem Träufel-Haltemittel an ein Aushärtehaltemittel übergeben wird, dass seinerseits ein eigenes Kontaktmittel umfasst.

Das Imprägnieren der Maschinenteile lässt sich weiter automatisieren, wenn die Imprägniervorrichtung mindestens eine manuelle oder automatische Be- und Entladeeinheit umfasst, durch mindestens eine manuelle oder automatische Be- und Entladungseinheit, durch die mindestens ein Maschinenteil von der Vorerwärmungseinrichtung entladbar und die Erwärmungseinrichtung mit dem entladenen Maschinenteil der Vorerwärmungseinrichtung beladbar und das Maschinenteil an dem Träufel-Haltemittel festlegbar ist und durch mindestens Überführungseinrichtung durch die das Träufel-Haltemittel von der Vorerwärmungseinrichtungs-Wärmeeinheit zur Erwärmungseinrichtungs-Wärmeeinheit zur Träufeleinrichtung-Wärmeeinheit und/oder zur Aushärteeinrichtungs-Wärmeeinheit überführbar ist.

Solchenfalls können die in der Vorerwärmungseinrichtung aufgeheizten Maschinenteile auf einfache Weise der Erwärmungseinrichtung oder unmittelbar der Träufeleinrichtung übergeben werden.

Darüber hinaus erweist es sich als vorteilhaft, wenn die Überführungseinrichtung mindestens eine eine Drehachse umfassende Lagereinheit umfasst, durch die das mindestens eine Maschinenteil um die Drehachse der Lagereinheit drehbar bewegbar gelagert ist und/oder wenn die Überführungseinrichtung mindestens einen Drehantrieb umfasst, durch den das Maschinenteil um die Drehachse drehend bewegbar angetrieben oder antreibbar ist.

Ferner erweist es sich bei einer Ausführungsform der Imprägniervorrichtung als vorteilhaft, wenn die Überführungseinrichtung mindestens ein Translationsmittel umfasst, durch das das mindestens eine Haltemittel quer zur Drehachse bewegbar ist.

Darüber hinaus wird die Aufgabe gelöst durch ein Verfahren zum Betreiben mindestens einer Imprägniervorrichtung mit mindestens einem der zuvor genannten Merkmale mit den Schritten:
a. Festlegen mindestens eines Maschinenteils an einem Haltemittel und verbinden des Phasenanschlusses des Maschinenteils mit dem am Haltemittel festgelegten Kontaktmittel der Stromwärmeeinheit;
b. Erfassen oder Ermitteln eines elektrischen Widerstands des Maschinenteils, beim Anordnen am Haltemittel und/oder beim Anschließen an das mindestens eine Kontaktmittel der Stromwärmeeinheit, insbesondere ein Wicklungswiderstand (R20-Wert) des Maschinenteils, durch die Steuereinheit und Einstellen einer Stromstärke der Stromzufuhr;
c. Beheizen des Maschinenteils auf eine bestimmte Temperatur durch elektrisches Erwärmen des Maschinenteils durch die Stromwärmeeinheit;
d. Überführen des Maschinenteils direkt an die Träufeleinrichtung oder zunächst an die Erwärmungseinrichtung zum weiteren Erwärmen des Maschinenteils sowie anschließendes Überführen des Maschinenteils an die Träufeleinrichtung; und
e. Beträufeln des Maschinenteils mit Beschichtungsmittel in der Träufeleinrichtung.

Weitere Merkmale, Einzelheiten und Vorteile der Erfindung ergeben sich aus den beigefügten Patentansprüchen, aus der zeichnerischen Darstellung und nachfolgenden Beschreibung einer bevorzugten Ausführungsform der Imprägniervorrichtung und des Verfahrens.

In der Zeichnung zeigt:
- Figur 1: Eine schematische Vorderansicht auf ein Ausführungsbeispiel der Imprägniervorrichtung;
- Figur 2: Eine schematische Detailansicht einer Vorerwärmungseinrichtung der Imprägniervorrichtung gemäß Figur 1;
- Figur 3: Ein schematisches Ablaufdiagramm eines erfindungsgemäßen Verfahrens.

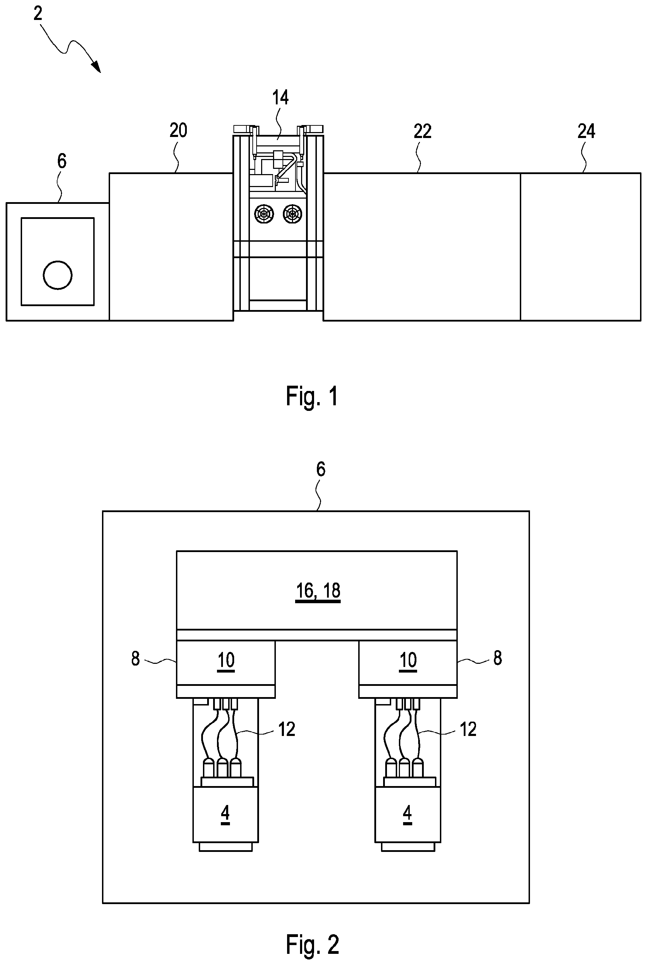

Figur 1 zeigt eine insgesamt mit dem Bezugszeichen 2 versehene Imprägniervorrichtung zum Träufelimprägnieren mindestens eines für elektrische Maschinen bestimmten Maschinenteils 4, wie Wickelgut. Das Wickelgut kann beispielsweise einen Stator eines Elektromotors umfassen.

Bei dem in den Figuren gezeigten Ausführungsbeispiel der Imprägniervorrichtung 2 umfasst diese eine Vorerwärmungseinrichtung 6, die mindestens ein Haltemittel 8 umfasst, an dem mindestens ein Maschinenteil 4 festlegbar ist. Darüber hinaus umfasst die Vorerwärmungseinrichtung 6 mindestens eine Stromwärmeeinheit 10, die durch mindestens ein Kontaktmittel 12 in der am Haltemittel 8 festgelegten Anordnung des Maschinenteils 4 mit mindestens einem Phasenanschluss des Maschinenteils 4 manuell oder automatisch verbunden ist. Durch das Kontaktmittel 12 ist das Maschinenteil 4 auf eine Vorerwärmungseinrichtungs-Temperatur elektrisch beheizbar.

Darüber hinaus umfasst die Imprägniervorrichtung 2 eine Träufeleinrichtung 14, der ein durch die Stromwärmeeinheit 10 der Vorerwärmungseinrichtung 6 auf die Vorerwärmungseinrichtungs-Temperatur beheiztes Maschinenteil 4 zuführbar ist und durch die ein unter Temperaturerhöhung aushärtendes Beschichtungsmittel, wie Harz, insbesondere Kunstharz, auf das Maschinenteil 4 auftragbar, insbesondere träufelbar, ist.

Darüber hinaus umfasst die Imprägniervorrichtung 2 mindestens ein Sensormittel 16, das einer Steuereinheit 18 zugeordnet ist und durch die ein elektrischer Widerstand des Maschinenteils 4 beim Anordnen am Haltemittel 8 und/oder beim Anschließen eines mindestens einen Kontaktmittels 12 der Stromwärmeeinheit 10 erfassbar oder ermittelbar ist.

Figur 1 zeigt ein Ausführungsbeispiel der Imprägniervorrichtung 2, bei der die Vorerwärmungseinrichtung 6 ortsfest im Raum festgelegt ist.

Darüber hinaus zeigt Figur 1 ein Ausführungsbeispiel der Imprägniervorrichtung 2, bei der zwischen der Vorerwärmungseinrichtung 6 und der Träufeleinrichtung 14 eine Erwärmungseinrichtung 20 angeordnet ist, an die die durch die Vorerwärmungseinrichtung 6 aufgeheizten Maschinenteile 4 übergebbar und auf einer Überwärmungseinrichtungs-Temperatur erwärmbar sind. Die Erwärmungseinrichtung 20 ist ofenartig ausgebildet und erwärmt die Maschinenteile 4 durch Wärmestrahlung, Wärmeleitung, Induktion, Konvektion und/oder erzwungener Konvektion.

Die Maschinenteile 4, die in der Erwärmungseinrichtung 20 angeordnet sind, sind im Anschluss nach Erreichen der Erwärmungseinrichtungs-Temperatur an die Träufeleinrichtung 14 übergebbar. Auch die Träufeleinrichtung 14 ist ofenartig ausgebildet und erwärmt oder hält das Maschinenteil 4 auf einer Träufeleinrichtungs-Temperatur.

In der Träufeleinrichtung 14 werden die Maschinenteile 4 mit Beschichtungsmittel beträufelt. Im Anschluss hieran ist bei dem in Figur 1 gezeigten Ausführungsbeispiel eine Aushärteeinrichtung 22 vorgesehen, die der Träufeleinrichtung 14 nachgeordnet ist und in der durch eine Aushärteeinrichtungs-Wärmeeinheit eine Aushärteeinrichtungs-Temperatur an den Maschinenteilen 4 einstellbar ist, um ein Aushärten des Beschichtungsmittels auf dem Maschinenteil 4 zu ermöglichen.

Darüber hinaus zeigt das Ausführungsbeispiel gemäß Figur 1 noch eine Kühlstrecke 24, in der das mittlerweile hart gewordene Beschichtungsmittel und das Maschinenteil 4 auf Umgebungstemperatur abkühlen können.

Sowohl in der Träufeleinrichtung 14 als auch in der Aushärteeinrichtung 22 werden die Maschinenteile 4 um eine Drehachse gedreht, um ein gleichmäßiges Auftragen und Aushärten des Beschichtungsmittels gewährleisten zu können.

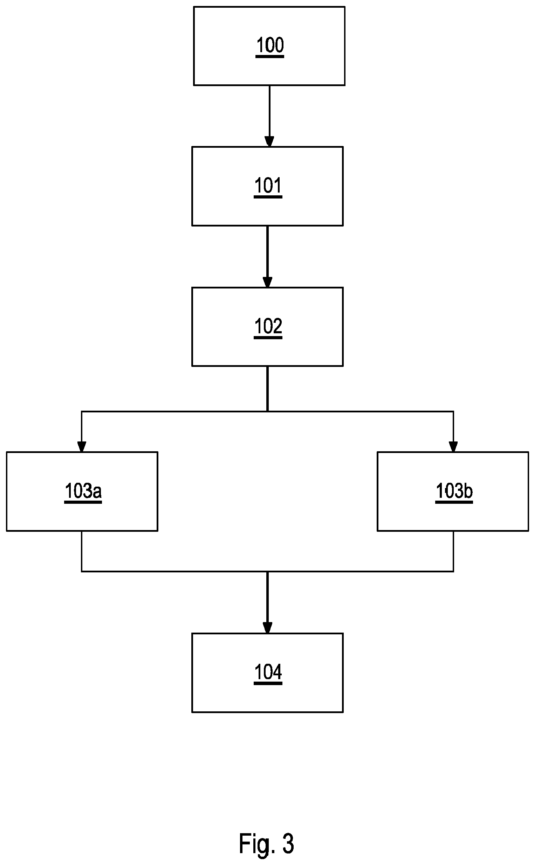

Figur 3 zeigt ein schematisches Ablaufdiagramm eines erfindungsgemäßen Verfahrens. Anhand der Darstellung gemäß Figuren 1 und 2 wird nachfolgend das Verfahren beschrieben:
In einem ersten Schritt 100 wird mindestens ein Maschinenteil 4 am Haltemittel 8 festgelegt und der Phasenanschluss des Maschinenteils 4 mit dem am Haltemittel 8 festgelegten Kontaktmittel 12 der Stromwärmeeinheit 10 verbunden.

In einem nachfolgenden Schritt 101 wird der elektrische Widerstand des Maschinenteils 4 erfasst oder ermittelt und eine Stromstärke der Stromzufuhr eingestellt.

Das Erfassen oder Ermitteln kann durch das Sensormittel 16 und der Steuereinheit 18, der das Sensormittel 16 funktional zugeordnet ist, erfolgen. Beispielsweise kann im Schritt 101 ein elektrischer Widerstand des Maschinenteils 4 ermittelt werden, insbesondere ein Wickelungswiderstand (R20-Wert) und auf dessen Grundlage des erfassten elektrischen Widerstands eine Stromstärke der Stromzufuhr eingestellt werden.

In einem nachfolgenden Schritt 102 wird das Maschinenteil 4 auf eine bestimmte Temperatur durch elektrisches Erwärmen des Maschinenteils 4 durch die Stromwärmeeinheit 10 beheizt.

Im nachfolgenden Schritt 103a wird das Maschinenteil 4 direkt an die Träufeleinrichtung 14 überführt. Dies ist dann der Fall, wenn die Imprägniervorrichtung 2 keine Erwärmungseinrichtung 20 umfasst, sondern unmittelbar an die Vorerwärmungseinrichtung 6 die Träufeleinrichtung 14 anschließt.

Umfasst die Imprägniervorrichtung 2 jedoch eine Erwärmungseinrichtung 20, wird in einem alternativen Schritt 103b das Maschinenteil 4 an die Erwärmungseinrichtung 2 zum weiteren Erwärmen des Maschinenteils 4 übergeben und anschließend das Maschinenteil 4 an die Träufeleinrichtung 14 übergeben.

In einem Schritt 104 wird das Maschinenteil 4 mit Beschichtungsmittel in der Träufeleinrichtung 14 beträufelt.

Die in der vorstehenden Beschreibung, in den Ansprüchen sowie in der Zeichnung offenbarten Merkmale der Erfindung, können sowohl einzeln, als auch in jeder beliebigen Kombination in der Verwirklichung der Erfindung in ihren verschiedenen Ausführungsformen im Rahmen des Schutzumfangs der nachfolgenden Ansprüche wesentlich sein.

### Bezugszeichenliste

- 2: Imprägniervorrichtung
- 4: Maschinenteil
- 6: Vorerwärmungseinrichtung
- 8: Haltemittel
- 10: Stromwärmeeinheit
- 12: Kontaktmittel
- 14: Träufeleinrichtung
- 16: Sensormittel
- 18: Steuereinheit
- 20: Erwärmungseinrichtung
- 22: Aushärteeinrichtung
- 24: Kühlstrecke

- 100-104: Verfahrensschritte

## Patentansprüche

1. Imprägniervorrichtung (2) zum Träufelimprägnieren mindestens eines für elektrische Maschinen bestimmten Maschinenteils (4), wie Wickelgut, insbesondere Stator oder Rotor, mit mindestens einer Vorerwärmungseinrichtung (6), die mindestens ein Haltemittel (8), an dem mindestens ein Maschinenteil (4) festlegbar ist, und die mindestens eine Stromwärmeeinheit (10) aufweist, die durch mindestens ein Kontaktmittel (12) in der am Haltemittel (8) festgelegten Anordnung des Maschinenteils (4) mit mindestens einem Phasenanschluss des Maschinenteils (4) manuell oder automatisch verbindbar oder verbunden ist und durch die das Maschinenteil (4) auf eine Vorerwärmungseinrichtungs-Temperatur elektrisch beheizbar ist, und mit mindestens einer Träufeleinrichtung (14), der ein durch die Stromwärmeeinheit (10) der Vorerwärmungseinrichtung (6) auf die Vorerwärmungseinrichtungs-Temperatur beheiztes Maschinenteil (4) mittelbar oder unmittelbar zuführbar ist und durch die ein unter Temperaturerhöhung aushärtendes Beschichtungsmittel, wie Harz, insbesondere Kunstharz, auf das Maschinenteil (4) auftragbar, insbesondere träufelbar ist.

2. Imprägniervorrichtung (2) nach Anspruch 1, **gekennzeichnet durch** mindestens eine mindestens ein Sensormittel (16) umfassende Steuereinheit (18), durch die ein elektrischer Widerstand des Maschinenteils (4) beim Anordnen am Haltemittel (8) und/oder beim Anschließen an das mindestens eine Kontaktmittel (12) der Stromwärmeeinheit (10) erfassbar oder ermittelbar ist, insbesondere ein Wicklungswiderstand (R20-Wert) des Maschinenteils (4) erfassbar ist, und durch die auf Grundlage des erfassten elektrischen Widerstands eine Stromstärke der Stromzufuhr einstellbar ist.

3. Imprägniervorrichtung (2) nach Anspruch 1 oder 2, **dadurch gekennzeichnet, dass** die Vorerwärmungseinrichtung (6) relativ zur Träufeleinrichtung (14) bewegbar ist und/oder dass die Träufeleinrichtung (14) ortsfest im Raum festgelegt ist.

4. Imprägniervorrichtung (2) nach mindestens einem der vorhergehenden Ansprüche, **gekennzeichnet durch** mindestens eine Erwärmungseinrichtung (20), die zwischen Vorerwärmungseinrichtung (6) und Träufeleinrichtung (14) angeordnet ist und die eine Erwärmungseinrichtungs-Wärmeeinheit aufweist, durch die eine Erwärmungseinrichtungs-Temperatur am von der Vorerwärmungseinrichtung (6) an die Erwärmungseinrichtung (20) überführten Maschinenteil (4) einstellbar ist, die insbesondere der Vorerwärmungseinrichtungs-Temperatur entspricht oder bezüglich der Vorerwärmungseinrichtungs-Temperatur erhöht ist.

5. Imprägniervorrichtung (2) nach mindestens einem der vorhergehenden Ansprüche, **dadurch gekennzeichnet, dass** die Träufeleinrichtung (14) eine Träufeleinrichtung-Wärmeeinheit aufweist, durch die eine Träufeleinrichtungs-Temperatur am von der Vorerwärmungseinrichtung (6) oder von der Erwärmungseinrichtung (20) an die Träufeleinrichtung (14) überführten Maschinenteil (4) einstellbar ist.

6. Imprägniervorrichtung (2) nach einem der vorhergehenden Ansprüche, **gekennzeichnet durch** mindestens eine Aushärteeinrichtung (22), die der Träufeleinrichtung (14) nachgeordnet ist und die eine Aushärteeinrichtungs-Wärmeeinheit aufweist, durch eine Aushärteeinrichtungs-Temperatur am von der Träufeleinrichtung (14) an die Aushärteeinrichtung (22) überführten Maschinenteil (4) einstellbar ist, die der Träufeleinrichtungs-Temperatur entspricht oder die bezüglich der Träufeleinrichtungs-Temperatur reduziert ist.

7. Imprägniervorrichtung (2) nach einem der vorhergehenden Ansprüche, **dadurch gekennzeichnet, dass** die Erwärmungseinrichtungs-Wärmeeinheit, die Träufeleinrichtungs-Wärmeeinheit und/oder die Aushärteeinrichtungs-Wärmeeinheit einen Ofen umfasst, durch den das Maschinenteil (4) durch Wärmestrahlung, Wärmeleitung, Induktion, Konvektion und/oder erzwungener Konvektion beheizbar ist

8. Imprägniervorrichtung (2) nach einem der Ansprüche 1 bis 6, **dadurch gekennzeichnet, dass** die Erwärmungseinrichtungs-Wärmeeinheit, die Träufeleinrichtung-Wärmeeinheit und/oder die Aushärteeinrichtungs-Wärmeeinheit jeweils eine eigene oder eine gemeinsame Stromwärmeeinheit (10) aufweisen, durch die das Maschinenteil (4) elektrisch beheizbar ist.

9. Imprägniervorrichtung (2) nach Anspruch 8, **dadurch gekennzeichnet, dass** die jeweils eine eigene Stromwärmeeinheit (10) aufweisende Erwärmungseinrichtungs-Wärmeeinheit, Träufeleinrichtung-Wärmeeinheit und/oder Aushärteeinrichtung-Wärmeeinheit jeweils eine ein Sensormittel (16) umfassende Steuereinheit (18) umfasst, durch die ein elektrischer Widerstand des Maschinenteils (4) erfassbar oder ermittelbar ist, insbesondere ein Wicklungswiderstand (R20-Wert) des Maschinenteils (4) erfassbar ist, und durch die auf Grundlage des erfassten elektrischen Widerstands eine Stromstärke der Stromzufuhr zu einstellen der jeweiligen Maschinenteil-Temperatur einstellbar ist oder dass die eine gemeinsame Stromwärmeeinheit (10) aufweisenden Erwärmungseinrichtungs-Wärmeeinheit, Träufeleinrichtung-Wärmeeinheit und/oder Aushärteeinrichtung-Wärmeeinheit jeweils eine gemeinsame Steuereinheit (18) und in den Einheiten jeweils ein der gemeinsamen Steuereinheit (18) zugeordnetes Sensormittel (16), durch die ein elektrischer Widerstand des Maschinenteils (4) erfassbar oder ermittelbar ist, insbesondere ein Wicklungswiderstand (R20-Wert) des Maschinenteils (4) erfassbar ist, und durch die auf Grundlage des erfassten elektrischen Widerstands eine Stromstärke der Stromzufuhr zu einstellen der jeweiligen Maschinenteil-Temperatur in der jeweiligen Einheit einstellbar ist.

10. Imprägniervorrichtung (2) nach Anspruch 8 oder 9, **gekennzeichnet durch** mindestens eine Überführungseinrichtung, an der das Haltemittel (8) festgelegt ist und durch die das Haltemittel (8) von der Vorerwärmungseinrichtung-Wärmeeinheit zur Erwärmungseinrichtungs-Wärmeeinheit zur Träufeleinrichtung-Wärmeeinheit und/oder zur Aushärteeinrichtungs-Wärmeeinheit überführbar ist.

11. Imprägniervorrichtung (2) nach Anspruch 10, **gekennzeichnet, durch** mindestens zwei Haltemittel (8) und durch mindestens zwei Kontaktmittel (12), wobei jeweils ein Kontaktmittel (12) einem Haltemittel (8) zugeordnet ist und wobei mindestens ein Vorerwärmungs-Haltemittel in der Vorerwärmungseinrichtung (6) und ein Träufel-Haltemittel in der Erwärmungseinrichtung (20) anordenbar ist, wobei das Träufel-Haltemittel der gemeinsamen oder der jeweiligen Stromwärmeeinheit (10) von Erwärmungseinrichtungs-Wärmeeinheit, Träufeleinrichtung-Wärmeeinheit und/oder Aushärteeinrichtung-Wärmeeinheit zuordenbar ist, die mindestens ein in oder am Träufel-Haltemittel festgelegtes Träufel-Kontaktmittel umfasst, das in der am Träufel-Haltemittel festgelegten Anordnung des Maschinenteils (4) mit mindestens einem Phasenanschluss des Maschinenteils (4) manuell oder automatisch mit einer Stromzufuhr der Stromwärmeeinheit (10) verbindbar oder verbunden ist und durch das das Maschinenteil (4) durchgehend und unterbrechungsfrei elektrisch beheizbar ist.

12. Imprägniervorrichtung (2) nach einem der Ansprüche 10 oder 11, **gekennzeichnet durch** mindestens eine manuelle oder automatische Be- und Entladungseinheit, durch die mindestens ein Maschinenteil (4) von der Vorerwärmungseinrichtung (6) entladbar und die Erwärmungseinrichtung (20) mit dem entladenen Maschinenteil (4) der Vorerwärmungseinrichtung (6) beladbar und das Maschinenteil (4) an dem Träufel-Haltemittel festlegbar ist und durch mindestens Überführungseinrichtung durch die das Träufel-Haltemittel von der Vorerwärmungseinrichtungs-Wärmeeinheit zur Erwärmungseinrichtungs-Wärmeeinheit zur Träufeleinrichtung-Wärmeeinheit und/oder zur Aushärteeinrichtungs-Wärmeeinheit überführbar ist.

13. Imprägniervorrichtung (2) nach einem der Ansprüche 10 bis 12, **dadurch gekennzeichnet, dass** die Überführungseinrichtung mindestens eine eine Drehachse umfassende Lagereinheit umfasst, durch die das mindestens eine Maschinenteil (4) um die Drehachse der Lagereinheit drehbar bewegbar gelagert ist und/oder dass die Überführungseinrichtung mindestens einen Drehantrieb umfasst, durch den das Maschinenteil (4) um die Drehachse drehend bewegbar angetrieben oder antreibbar ist.

14. Imprägniervorrichtung (2) nach einem der Ansprüche 10 bis 13, **dadurch gekennzeichnet, dass** die Überführungseinrichtung mindestens ein Translationsmittel umfasst, durch das das mindestens eine Haltemittel (8) quer zur Drehachse bewegbar ist.

15. Verfahren zum Betreiben mindestens einer Imprägniervorrichtung (2) nach einem der der Ansprüche 1 bis 14 mit den Schritten:
a. Festlegen mindestens eines Maschinenteils (4) an einem Haltemittel (8) und verbinden des Phasenanschlusses des Maschinenteils (4) mit dem am Haltemittel (8) festgelegten Kontaktmittel (12) der Stromwärmeeinheit (10);
b. Erfassen oder Ermitteln eines elektrischen Widerstands des Maschinenteils (4), beim Anordnen am Haltemittel (8) und/oder beim Anschließen an das mindestens eine Kontaktmittel (12) der Stromwärmeeinheit (10), insbesondere ein Wicklungswiderstand (R20-Wert) des Maschinenteils (4), durch die Steuereinheit (18) und Einstellen einer Stromstärke der Stromzufuhr;
c. Beheizen des Maschinenteils (4) auf eine bestimmte Temperatur durch elektrisches Erwärmen des Maschinenteils (4) durch die Stromwärmeeinheit (10);
d. Überführen des Maschinenteils (4) direkt an die Träufeleinrichtung (14) oder zunächst an die Erwärmungseinrichtung (20) zum weiteren Erwärmen des Maschinenteils (4) sowie anschließendes Überführen des Maschinenteils (4) an die Träufeleinrichtung (14); und
e. Beträufeln des Maschinenteils (4) mit Beschichtungsmittel in der Träufeleinrichtung (14).
